# EUROPÄISCHE PATENTSCHRIFT

(11) **EP 2 078 169 B1**
(45) Veröffentlichungstag und Bekanntmachung des Hinweises auf die Patenterteilung: **14.11.2012**
(21) Anmeldenummer: 07818499.1
(22) Anmeldetag: 27.09.2007
(51) Int. Cl.: F16F 15/121, F16F 15/173

(54) **DREHSCHWINGUNGSDÄMPFER**
TORSIONAL VIBRATION DAMPER
AMORTISSEUR DE VIBRATIONS DE TORSION

(30) Priorität: 29.09.2006 DE 102006046681
(43) Veröffentlichungstag der Anmeldung: 15.07.2009
(73) Patentinhaber: Hasse & Wrede GmbH, 12681 Berlin (DE)
(72) Erfinder: KIENER, Wolfgang, 92431 Neunburg v.W. (DE); KNOPF, Florian, 14199 Berlin (DE)
(74) Vertreter: Mattusch, Gundula
(86) Internationale Anmeldenummer: PCT/EP2007/008416
(87) Internationale Veröffentlichungsnummer: WO 2008/040491

(56) Entgegenhaltungen:
- DE-A1- 1 526 475
- DE-A1- 2 818 295
- FR-A- 1 374 234
- US-A- 4 160 390

## Beschreibung

Drehschwingungsdämpfer mit auf dem Prinzip der Scherung beruhender Bedämpfung, mit einem Gehäuse und einem das Gehäuse verschließenden Deckel sowie einem innerhalb des geschlossenen, mit einem viskosen Fluid gefüllten Gehäuses beweglich gelagerten, vorzugsweise geschlossenem Schwungring, wobei das Gehäuse vorzugsweise mit einer zentralen Lagerbohrung versehen ist und der Schwungring und das Gehäuse über wenigstens eines oder mehrere speichenartig angeordnete Federelemente miteinander verbunden und dass das oder die Federelement(e) sowohl gehäuseseitig wie auch am Schwungring fest eingespannt ist bzw. sind, wobei die Federelemente (6) den Innenumfang des Schwungringes mit einem nabenartigen Haltering des Gehäuses verbinden und als Blattfedern ausgebildet sind, die in radial in den Schwungring eingebrachte Nuten eingreifen und über einen Presssitz klemmend mit dem Schwungring verbunden sind, dadurch gekennzeichnet, dass die Nuten breiter sind als die Dicke der Blattfedern und das zu beiden Seiten jeder Blattfeder zur Nutseite hin offene Aufnahmetaschen und in diese eingesetzte Lagerstifte vorgesehen sind, deren Lichterabstand zueinander maximal der Dicke der Blattfedern entspricht.

Drehschwingungsdämpfer der gattungsgemäßen Art sind beispielsweise aus der US 4 160 390 A bekannt und werden eingesetzt zur Dämpfung der Schwingungen an Wellen, insbesondere von Motoren. Dabei werden die Drehschwingungsdämpfer auf einer entsprechenden Welle über ihre Lagerbohrung zentriert.

Der vorliegenden Erfindung liegt die Aufgabe zugrunde, einen Drehschwingungsdämpfer der gattungsgemäßen Art so zu gestalten, dass der jeweilige Presssitz der Blattfedern in den Nuten des Schwungringes besonders einfach zu realisieren ist.

Diese Aufgabe wird erfindungsgemäß dadurch gelöst, dass die Nuten breiten sind als die Dicke der Blattfedern und dass zu beiden Seiten jeder Blattfeder zur Nutseite hin offene Aufnahmetasche und in diese eingesetzte Lagerstifte vorgesehen sind, deren Lichter Abstand zueinander maximal der Dicke der Blattfedern entspricht.

Durch diese Konstruktion wird erreicht, dass der jeweilige Presssitz erzielt wird durch die Lagerstifte und nicht durch unmittelbare Anlage der Blattfedern an den aneinander gegenüberliegenden Nut-Begrenzungen.

Eine konstruktiv besonders zweckmäßige Ausführung der Erfindung sieht vor, dass die Lagerstifte und entsprechend die Aufnahmetaschen einen kreisrunden Querschnitt aufweisen.

In fertigungstechnischer Hinsicht ist es mit den heute zur Verfügung stehenden Fertigungsmitteln möglich, entsprechende Bohrungen in ihrem Abstand zueinander äußert präzise anzubringen, sodass eine aufwendige Ein- und Nachjustierung der Lagerstifte nicht erforderlich ist.

Ausführungsbeispiele der Erfindung sind in den beigefügten Zeichnungen dargestellt und werden in Folgendem näher beschrieben.

Es zeigen:
- Figur 1: eine perspektivische Darstellung eines Drehschwingungsdämpfers gemäß dem bekannten Stand der Technik
- Figur 2: eine der Figur 1 entsprechenden Darstellung eines erfindungsgemäßen Drehschwingungsdämpfers
- Figur 3: die in Figur 2 mit III bezeichnete Einzelheit in vergrößerter Darstellung
- Figur 4: eine der Figur 3 entsprechende Einzelheit eines Drehschwingungsdämpfers nach einem weiteren Ausführungsbeispiel der Erfindung.

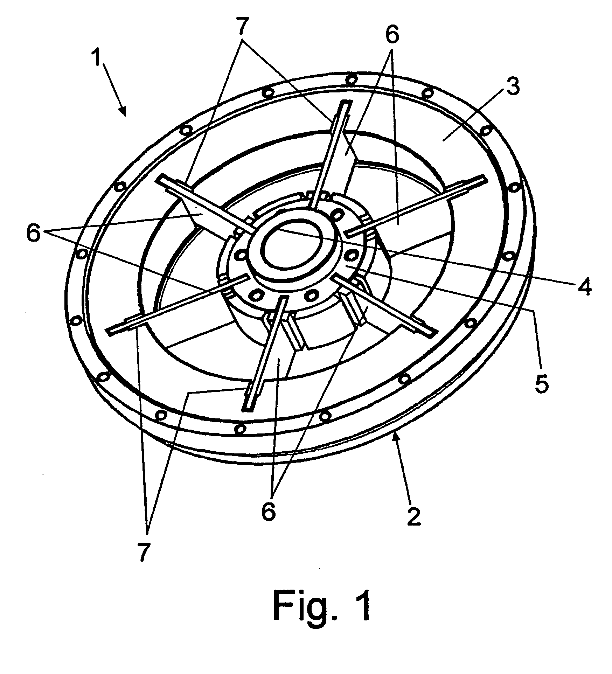

In Figur 1 ist mit dem Bezugszeichen 1 insgesamt ein Drehschwingungsdämpfer bezeichnet, der ein mit dem Bezugszeichen 2 versehenes Gehäuse aufweist, innerhalb dessen ein Schwungring 3 beweglich angeordnet ist.

Das Gehäuse 2 ist mit einem Fluid, vorzugsweise einem Silikonöl, gefüllt und wird durch einen in Figur 1 nicht dargestellten Deckel abdichtend verschlossen.

Das Gehäuse 2 ist mit einer zentralen Lagerbohrung 4 versehen und wird über diese Lagebohrung 4 auf einer zu bedämpfenden Welle zentriert.

Wie Figur 1 deutlich zeigt, ist der Schwungring 3 mit mehreren, radial verlaufenden und im Zentrumsbereich des Gehäuses in einem nabenartigen Haltering 5 befestigten Federelementen, bevorzugt in Form von Blattfedern 6, verbunden.

Diese Blattfedern 6 ragen in stufenartig ausgebildete Radialnuten 7 des Schwungringes 3 hinein, wobei diese Nuten 7 zur Zentrumsseite hin bereiter sind als die Dicke der Blattfedern 6 und zur Außenseite hin derart dimensioniert sind, dass sich ein Presssitz zwischen dem Schwungring 3 und den jeweiligen Blattfedern 6 ergibt.

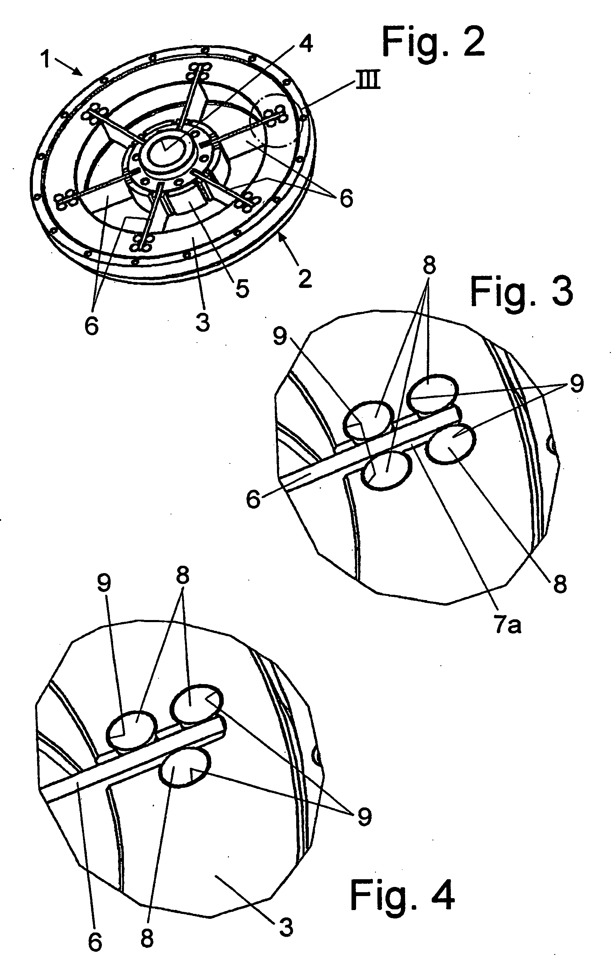

In den Figuren 2 und 3 ist ein Ausführungsbeispiel der Erfindung gezeigt, bei dem der grundsätzliche Aufbau des gesamten Drehschwingungsdämpfers 1 identisch ist mit dem vorstehend beschriebenen Ausführungsbeispiel gemäß Figur 1. Der Unterschied der Konstruktion nach den Figuren 2 und 3 im Vergleich zur Ausführung nach Figur 1 besteht lediglich darin, dass die radial äußeren Enden der Blattfedern 6 presssitzartig gehalten werden durch Lagerstifte 8, welche in Aufnahmetaschen 9 des Schwungringes 3 eingesetzt sind. Die Blattfedern 6 ragen mit ihren radial äußeren Enden wieder in eine Nut 7a des Schwungringes 3 hinein, der beim Ausführungsbeispiel nach den Figuren 2 und 3 aber deutlich größer ist als die Dicke der Blattfedern 6. Die Aufnahmetaschen 9 sind zur Seite der Nut 7a hin offen, so dass die Lagerstifte 8 in diese Nut 7a hineinragen können. Der lichte Abstand der Lagerstifte 8 zueinander ist so gewählt, dass dieser maximal der Dicke der Blattfedern 6 entspricht und sich ein zumindest leichter Presssitz für die Blattfedern 6 relativ zu den Lagerstiften 8 einstellt.

Konstruktiv ist dies besonders einfach dadurch zu verwirklichen, dass die Lagerstifte 8 und die entsprechenden Aufnahmetaschen 9 einen kreisrunden Querschnitt aufweisen. Es ist nämlich problemlos möglich, die entsprechend kreisrunden Aufnahmetaschen 9 zu beiden Seiten einer Nut 7a so genau in einen Schwungring 3 einbringen zu können, dass die darin eingesetzten Lagerstifte 8 den angestrebten Presssitz zu den Blattfedern 6 ergeben.

Beim Ausführungsbeispiel nach den Figuren 2 und 3 sind zur Fixierung einer Blattfeder 6 jeweils zwei Lagerstifte 8 zu den beiden Seiten einer Blattfeder 6 angeordnet.

Figur 4 macht deutlich, dass auch die Möglichkeit besteht, zwei Lagerstifte 8 auf einer Seite einer Blattfeder und lediglich einen Lagerstift 8 auf der gegenüberliegenden Seite der betreffenden Blattfeder anzuordnen, um das angestrebte Ziel eines leichten Presssitzes zu verwirklichen.

Die Lagerstifte 8 sind vorteilhafterweise aus Metall, bevorzugt aus einem hochwertigen Stahl, hergestellt.

Durch die konstruktive Gestaltung eines Drehschwingungsdämpfers 1 kann - in Verbindung mit der Möglichkeit, Blattfedern 6 mit unterschiedlichen Federcharakteristiken einsetzen zu können - das Gesamtverhalten eines entsprechenden Drehschwingungsdämpfers 1 erheblich besser eingestellt werden, als dies bei herkömmlichen Konstruktionen, bei denen der Schwungring 3 frei rotierbar innerhalb des Gehäuses 2 angeordnet ist, möglich ist.

## Patentansprüche

1. Drehschwingungsdämpfer (1) mit auf dem Prinzip der Scherung beruhender Bedämpfung, mit einem Gehäuse (2) und einem das Gehäuse (2) verschließenden Deckel sowie einem innerhalb des geschlossenen, mit einem viskosen Fluid gefüllten Gehäuses (2) beweglich gelagerten, vorzugsweise geschlossenem Schwungring (3), wobei das Gehäuse vorzugsweise mit einer zentralen Lagerbohrung (4) versehen ist und der Schwungring (3) und das Gehäuse (2) über wenigstens eines oder mehrere speichenartig angeordnete Federelemente (6) miteinander verbunden und dass das oder die Federelement(e) (6) sowohl gehäuseseitig wie auch am Schwungring (3) fest eingespannt ist bzw. sind, wobei die Federelemente (6) den Innenumfang des Schwungringes (3) mit einem nabenartigen Haltering (5) des Gehäuses (2) verbinden und als Blattfedern (6) ausgebildet sind, die in radial in den Schwungring (3) eingebrachte Nuten (7a) eingreifen und über einen Presssitz klemmend mit dem Schwungring (3) verbunden sind, **dadurch gekennzeichnet, dass** die Nuten (7a) breiter sind als die Dicke der Blattfedern (6) und das zu beiden Seiten jeder Blattfeder (6) zur Nutseite hin offene Aufnahmetaschen (9) und in diese eingesetzte Lagerstifte (8) vorgesehen sind, deren Lichter Abstand zueinander maximal der Dicke der Blattfedern (6) entspricht.

2. Drehschwingungsdämpfer nach Anspruch 1, **dadurch gekennzeichnet, dass** die Lagerstifte (8) und entsprechend die Aufnahmetaschen (9) einen kreisrunden Querschnitt aufweisen.

3. Drehschwingungsdämpfer nach Anspruch 1 oder 2, **dadurch gekennzeichnet, dass** die Lagerstifte (8) aus Metall, bevorzugt aus Stahl, hergestellt sind.

## Claims

1. Rotary oscillation damper (1) with a damping effect based on the shearing principle, comprising a housing (2) and a cover closing said housing (2) as well as a preferably closed gyrating ring (3) supported for movement inside said closed housing (2) that is filled with a viscous fluid, with said housing being preferably provided with a central bearing bore (4) and said gyrating ring (3) as well as said housing (2) being connected to each other via at least one or several spring elements (6) disposed in the form of spokes, and that said spring element(s) (6) is or are fixedly clamped both on the housing side and on said gyrating ring (3), wherein said spring elements (6) connect the inner periphery of said gyrating ring (3) to a hub-like retaining ring (5) of said housing (2) whilst they are configured as leaf springs (6) that are engaged in grooves (7a) radially formed in said gyrating ring (3), and are connected with clamping action to said gyrating ring (3) by press fit, **characterised in that** said grooves (7a) are wider than the thickness of said leaf springs (6) and that receiving pockets (9) are provided on both sides of each leaf spring (6), which are open towards the groove side and into which bearing pins (8) are inserted, which present a clearance distance from each other that corresponds to the thickness of said leaf springs (6) at maximum.

2. Rotary oscillation damper according to Claim 1, **characterised in that** said bearing pins (8) and correspondingly said receiving pockets (9) present a circular cross-section.

3. Rotary oscillation damper according to Claim 1 or 2, **characterised in that** said bearing pins (8) are made of metal, preferably of steel.

## Revendications

1. Amortisseur de vibrations par torsion (1) à un effet amortisseur à la base du principe de cisaillement, comprenant un carter (2) et un couvercle fermant ledit carter (2) ainsi qu'un anneau d'inertie (3) fermée de préférence, qui s'appuie pour un mouvement à l'intérieur dudit carter fermé (2), qui est rempli d'un fluide visqueux, audit carter étant muni, de préférence, d'un perçage de logement central (4) et ledit anneau d'inertie (3) ainsi que ledit carter (2) étant raccordé, l'un à l'autre, via au moins un ou plusieurs élément(s) à ressort (6) disposé(s) sous forme de rayons, et en ce que ledit/lesdits élément(s) à ressort (6) est/sont fixé(s) de façon serré du côté du carter et aussi sur ledit anneau d'inertie (3), dans lequel ledit/lesdits élément(s) à ressort (6) raccordent la périphérique intérieure dudit anneau d'inertie (3) à un anneau de retenue similaire à un moyeu dudit carter (2), pendant qu'ils sont configurés sous forme des ressorts à lame (6), qui se trouvent en prise dans des rainures (7a) formées radialement dans ledit anneau d'inertie (3) par ajustement serré, **caractérisé en ce que** lesdites rainures (7a) sont plus larges que l'épaisseur desdits ressorts à lame (6) et **en ce que** des poches de réception (9) sont formées des deux côtés de chaque ressort à lame (6), qui sont ouvertes vers le côté de rainure et dans lesquels on place des chevilles de logement (8), qui présente un écartement intérieur l'un de l'autre, qui correspond à l'épaisseur desdits ressorts jà lame (6) au maximum.

2. Amortisseur de vibrations par torsion selon la revendication 1, **caractérisé en ce que** lesdites chevilles de logement (8) et, en correspondance, lesdites poches de réception (9) présente un profil en travers circulaire.

3. Amortisseur de vibrations par torsion selon la revendication 1 ou 2, **caractérisé en ce que** lesdites chevilles de logement (8) sont faites en métal, de préférence en acier.
